# EUROPEAN PATENT SPECIFICATION

(11) **EP 1 048 547 B1**
(45) Date of publication and mention of the grant of the patent: **25.10.2006**
(21) Application number: 00201331.6
(22) Date of filing: 13.03.2000
(51) Int. Cl.: B62D 1/183, B62D 1/18

(54) **Steering column assembly**
Lenksäuleneinheit
Ensemble d'une colonne de direction

(30) Priority: 26.04.1999 GB 9909395
(43) Date of publication of application: 02.11.2000
(73) Proprietor: CNH U.K. LIMITED, Basildon, Essex SS14 3AD (GB)
(72) Inventor: Mowatt, Jeffrey W., Billericay, Essex CM11 1BY (GB)
(74) Representative: Vandenbroucke, Alberic

(56) References cited:
- DE-U- 29 700 212
- US-A- 5 088 342
- US-A- 5 168 768
- US-A- 5 890 397

## Description

The present invention relates to a steering column assembly for a vehicle that is particularly applicable to an agricultural vehicle, as e.g. disclosed in US-A-5 890 397.

It has already been proposed in US-A-5.168.768, which discloses a steering column according to the preamble of claim 1, to provide a steering column that can be released to move rapidly from an adjustable comfortable driving position for the driver to an elevated retracted position that allows the driver to enter and leave the cab of the vehicle with greater ease. On re-entering the cab, the steering wheel can be returned to the driving position, which is remembered by the steering column assembly so that the driver does not need to search for a new comfortable driving position on each return to the cab.

The mechanism proposed in US-A-5.168.768 for achieving this desired rapid release of the steering wheel is complex and expensive to implement. Furthermore, the embodiment of US-A-5.168.768 has the disadvantage that the location of the fully retracted position depends on the location of the steering wheel in the driving position before release to the retracted position.

It is therefore an object of the present invention to provide a simpler alternative.

According to the present invention, a steering column assembly is provided comprising :
- a lower column section,
- an upper column section carrying a steering wheel, the two sections being articulated to one another to allow the upper section to pivot between a driving position and a retracted position; and
- a compression spring provided to act between the two sections of the steering column to raise the upper section to the retracted position upon release of a catch mechanism.

The steering column assembly is characterized in that it further comprises a strut of adjustable length pivotably connected at one end to one of the column sections, the other end of the strut being constrained to move relative to the other column section along a fixed track; the strut being operable to adjust the driving position of said upper column section relative to said lower column section and said releasable catch mechanism being operable to retain the second end of the strut at one end of the track when the steering wheel is in the driving position; movement of the second end of the strut towards the other end of the track upon release of the catch mechanism being accompanied by pivoting of the upper steering column section towards the retracted position.

Preferably, the catch mechanism is releasable by a foot operated pedal mounted on the lower end of the lower section of the steering column.

Advantageously, the strut may be a gas strut that can be locked in any position but alternatively it may be formed of two parts in screw threaded engagement with one another. Conveniently, a compression spring may be provided to act between the two sections of the steering column to raise the upper section to the retracted position when the catch mechanism is released.

The invention will now be described further, by way of example, with reference to the accompanying drawings, in which:
Figure 1 is perspective view of a steering column assembly of the invention;
Figure 2 is a side view of the assembly in Figure 1 with the upper section of the column in the driving position;
Figure 3 is a similar view to that of Figure 2 showing the upper section in its elevated, retracted position;
Figure 4 is a perspective view of the steering column taken from one side with the upper section of the column in the elevated, retracted position;
Figure 5 is a view similar to Figure 4 but taken from the other side;
Figure 6 is a side view of the assembly with the steering column in an intermediate driving position and with part of the construction being shown in a transparent manner for clarity reasons; and
Figure 7 is a view similar to that of Figure 6 showing the upper section of the steering column in the fully retracted position.

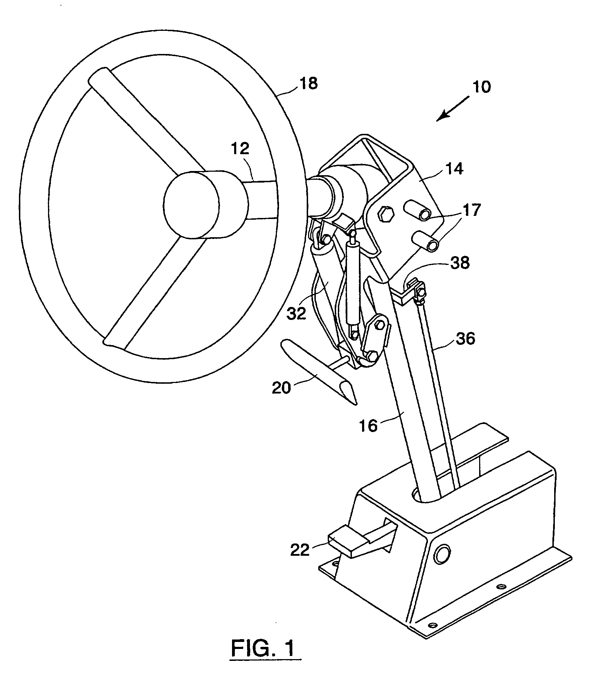

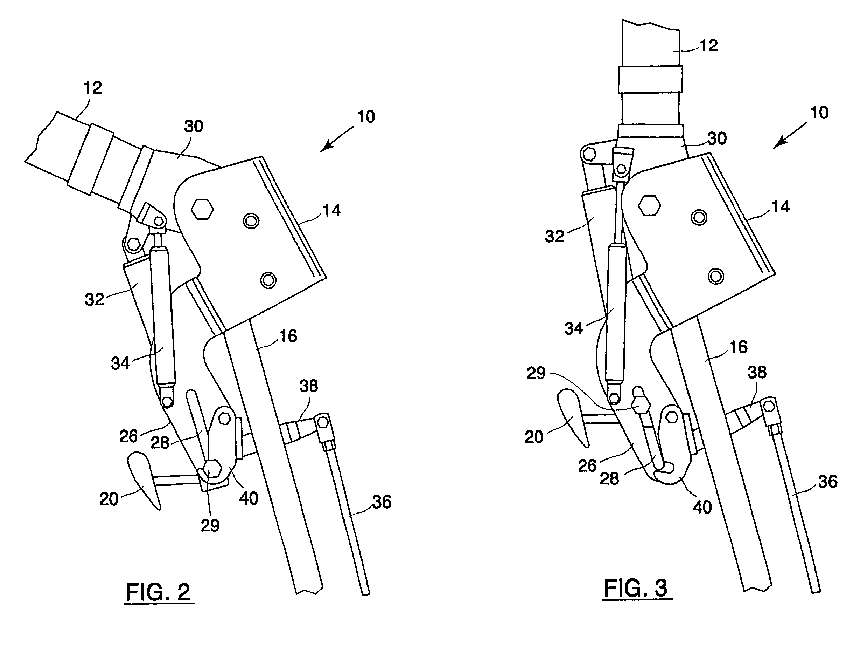

Figure 1 shows an adjustable steering column assembly 10 for a tractor or any similar vehicle controlled from a driver's cab having restricted access. The steering column assembly 10 comprises an upper section 12 pivotable about a bracket 14 that is mounted on the upper end of a stationary lower section 16. The bracket 14 normally is fixedly attached to the structure of the cab by means of mounting points 17. A steering wheel 18 is mounted on the free end of the upper section 12 of the steering column assembly 10 and its height relative to the driver can be adjusted using a handle 20. In addition, a pedal 22 is mounted near the lower end of the lower section 16 of the steering column assembly 10 by means of which the steering wheel 18 can be quickly raised to a retracted position (shown in Figures 3-5 and 7) that allows the driver to enter and leave the cab of the tractor more easily. The adjustment of the upper section 12 of the steering column assembly 10 is such that it can be returned quickly to an operating position from its retracted position when the driver re-enters the cab.

The mechanism for adjusting the position of the upper section of the steering column is shown in more detail in Figures 2 to 5. Figure 2 shows the upper section 12 of the steering column in the operating or driving position whereas Figures 3 to 5 show it in the retracted position.

The bracket 14 has two depending legs 26 that extend parallel to one another and lie one on each side of lower section 16 of the steering column assembly 10. Each of the legs 26 has an elongate slot 28 which slidably receive between them a T-piece (only the projecting ends 29 thereof being shown) fitted to the lower end of a gas strut 32. The upper end of the gas strut 32 is pivotably mounted on a collar 30 that surrounds the lower end of the upper section 12 of the steering column.

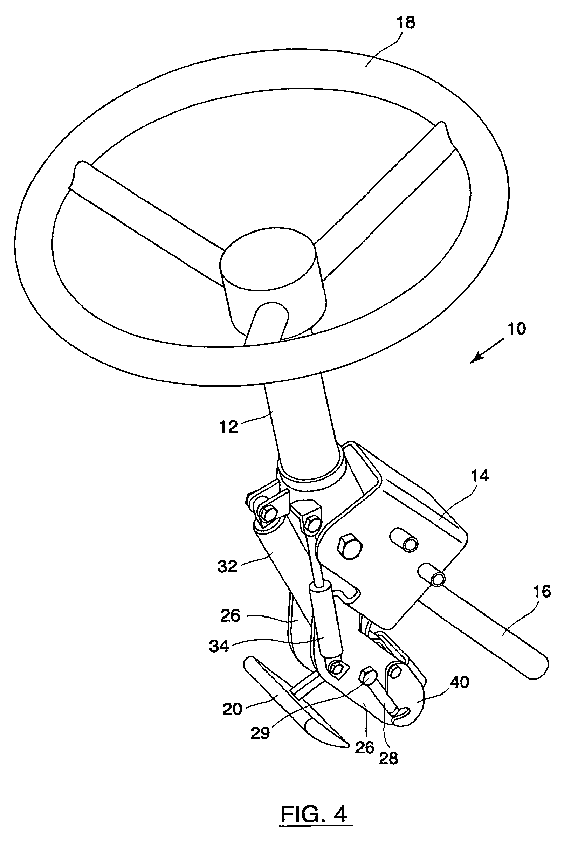

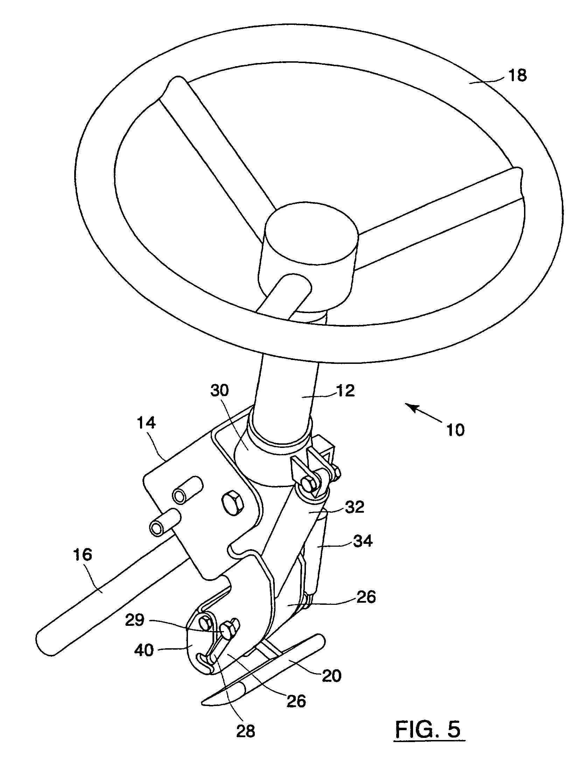

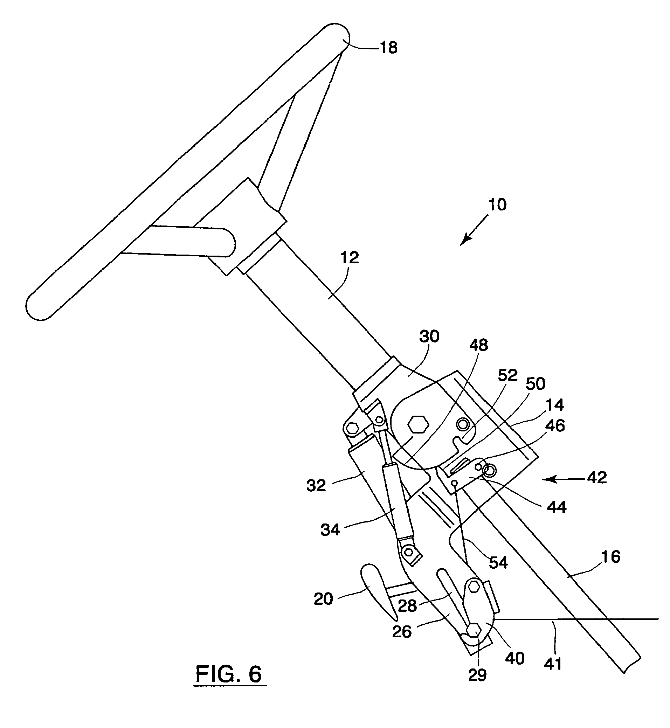

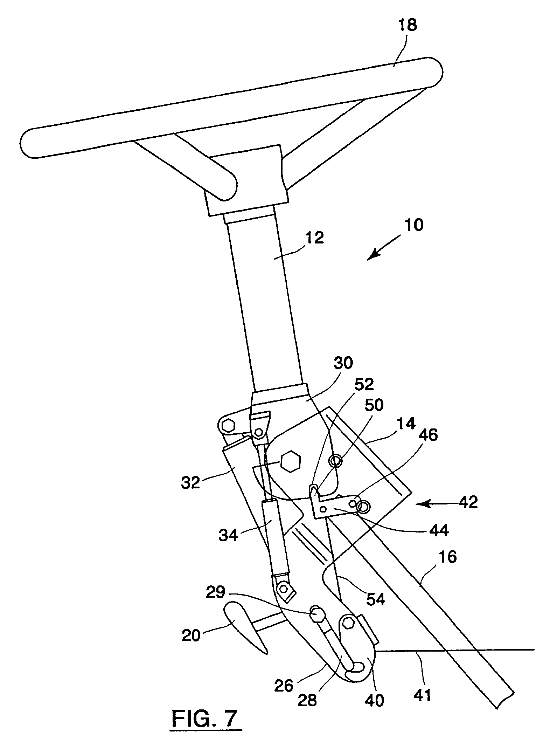

A catch mechanism is provided to lock the lower end of the gas strut 32 in its lowermost position in the grooves 28. The catch mechanism comprises a spring biased catch plate 40 that is pivotably mounted on one of the legs 26 and has a C-shaped cut-out at its free end that engages one of the projecting ends 29 of the T-piece when it reaches the lower end of slot 28. Although not absolutely required, a catch plate 40 may be associated with each leg 26 (as best seen in Figures 4 and 5), the catch plates then being fixedly connected to each other for unitary movement. The catch plate 40 is retractable from the locked driving position shown in Figure 2 to the retracted position shown in Figure 3 by means of the release pedal 22, which is connected to the catch plate 40 by means of a linkage comprising a rod 36 and a lever 38 (not represented in Figures 4 and 5). As schematically shown in Figures 6 and 7, the linkage also may consist of an appropriately guided cable 41 inbetween the catch plate 40 and the release pedal 22. In addition, a spring 34 is mounted between the collar 30 and one of the legs 26 to raise the upper section 12 of the steering column when the catch mechanism 29, 40 is released.

The driver on entering the cab will find the steering wheel 18 in its raised retracted position so that access to the cab is unimpeded. The steering wheel 18 is then lowered to its driving position, during which time the T-piece at the lower end of the gas strut 32 will slide along the slots 28 in the legs 26 of the bracket 14, until the projecting end 29 comes into contact with the catch plate 40. At this time, the downward force on the gas strut 32 will pivot the spring biased catch plate 40 out of its path and it will continue moving until it reaches the end of the slot 28. Once the T-piece has reached the end of the slots 28, the catch plate 40 can return to its locking position shown in Figure 2 in which its C-shaped cut-out engages the projecting end 29 of the T-piece and prevents it from sliding back up the slots 28 under the action of the spring 34.

The upper section 12 of the steering column 10 is now locked in its driving position and it can be adjusted by shortening or lengthening the gas strut 32. This is done by means of the handle 20 which operates a pressure release valve within the gas strut. With the valve open, the strut 32 can be extended or contracted by raising or lowering the steering wheel 18. Once a comfortable driving position has been found, the valve is again closed by means of the handle 20 to memorise the desired driving position.

When the driver wishes to leave the cab, the pedal 22 is depressed and acts through the linkage 36, 38 on the catch plate 40 to pivot it anticlockwise as viewed in Figure 3 to a position in which it releases the T-piece at the end of the gas strut 32. Under the action of the spring 34, the upper section 12 of the steering column 10 can now move to the retracted position shown in Figures 3 to 5 to allow the driver to leave the vehicle, unimpeded by the steering wheel 18.

Once a driver has found a comfortable driving position for the steering wheel 18, it will automatically return to the same position on re-entering the vehicle as the length of the gas strut 32, as previously set by the operator, will not be changed by the act of raising and lowering the steering wheel 18.

It will be seen in Figure 3 that though the steering column has reached its retracted position, the projecting end 29 of the T-piece at the end of the gas strut 32 has not reached the upper end of the slot 28. This is because the retracted position is not determined by the length of the gas strut 32, as adjusted by the operator, but by the spring 34 which raises the steering wheel until it comes to a stop against an abutment. This abutment is conveniently within the spring 34 itself but it may alternatively be part of the bracket 14.

Referring specifically to Figures 6 and 7, the bracket 14 is represented in a transparent manner to conveniently disclose a further catch mechanism 42 comprising a lock member 44 which is pivotably attached to a pivot 46 provided on the upper end of the lower section 16 of the steering column 10. The lock member 44 is spring biased in the clockwise direction with reference to Figure 6 towards a curved lower surface 48 of the collar 30. During normal adjustment of the operative position of the steering wheel 18, an angled projection 50 of the member 44 slides over the surface 48 without hindering movement of the upper section 12. However, upon reaching the fully retracted position of the steering column 10, as seen in Figure 7, the projection 50 engages a slot 52 in the collar 30 thereby preventing any further movement of the upper section 12 in the one or other direction. The additional catch mechanism 42 is provided to facilitate the operator to leave the cab since it is experienced that an operator trying to leave the tractor seat normally grabs onto a cab component which is in front of him to pull himself up, which in this particular case happens to be the steering wheel 18. If no lock mechanism were provided, any rearward pulling action on the steering wheel 18 would result in the steering wheel returning to its memorised operative position, which of course is not desirable at that instant.

To enable the operator to release the catch mechanism 42 upon re-entering the cab to return the steering wheel to its desired operative position, a Bowden type cable 54 is connected inbetween the lock member 44 and the catch plate mechanism 40. When the pedal 22 is depressed, the catch plate 40 is retracted, at the same time unlocking the catch mechanism 42. The operator then pulls onto the steering wheel 18 and releases the pedal 22 whereby the catch plate 40 returns to a position ready to receive the projecting end 29 of the T-piece for locking the steering wheel 18 in its operative position. The pedal 22 thus has a dual function : on the one hand unlocking the catch 40 to place the steering column in an "egress" position, and, on the other hand, releasing the further catch mechanism 42 to return the steering column to its operative position.

It will be appreciated that the gas strut 32 is just one example of a rod of variable length and that it may be replaced, for example, by two telescoped tubes that are screw threaded to one another or that can be locked in any suitable manner relative to one another. Similarly, the linear slots 28 are just one way of guiding the lower end of the strut 32 to move along a fixed track or path. These and other modifications may thus be made to the described embodiment without departing from the scope of the invention as set forth in the appended claims.

## Claims

1. A steering column assembly (10) comprising :
- a lower column section (16),
- an upper column section (12) carrying a steering wheel (18), the two sections (12, 16) being articulated to one another to allow the upper section (12) to pivot between a driving position and a retracted position; and
- a compression spring (34) provided to act between the two sections (12, 16) of the steering column (10) to raise the upper section (12) to the retracted position upon release of a catch mechanism (40); and
**characterized in that** the steering column assembly (10) further comprises a strut (32) of adjustable length pivotably connected at one end to one of the column sections (12), the other end of the strut (32) being constrained to move relative to the other column section (16) along a fixed track (28); the strut (32) being operable to adjust the driving position of said upper column section (12) relative to said lower column section (16) and said releasable catch mechanism (40) being operable to retain the second end of the strut (32) at one end of the track (28) when the steering wheel (18) is in the driving position; movement of the second end of the strut (32) towards the other end of the track (28) upon release of the catch mechanism (40) being accompanied by pivoting of the upper steering column section (12) towards the retracted position.

2. A steering column assembly according to claim 1, **characterized in that** the catch mechanism (40) is releasable by a foot operated pedal (22) mounted on the lower end of the lower section (16) of the steering column (10).

3. A steering column assembly according to claims 1 or 2, **characterized in that** the strut (32) is a gas strut that can be locked in any position.

4. A steering column assembly according to claims 1 or 2, **characterized in that** the strut is formed of two telescoped parts in screw threaded engagement with one another.

5. A steering column assembly according to any of the preceding claims, **characterized in that**
- a stationary bracket (14) is mounted on the upper end of the lower column section (12); and
- the track (28) consists of at least one slot (28) provided in a depending leg member (26) of the bracket (14).

6. A steering column assembly according to any of the preceding claims, **characterized in that** a releasable lock mechanism (42) is operable to lock the upper column section (12) in a retracted position.

7. A steering column assembly according to claim 6 when appended directly or indirectly to claim 2, **characterized in that** the lock mechanism (42) is operatively connected to said catch mechanism (40); said lock mechanism (42) being unlocked by actuation of said foot pedal (22).

## Patentansprüche

1. Lenksäulen-Baugruppe (10) mit:
- einem unteren Lenksäulen-Abschnitt (16),
- einem oberen Lenksäulen-Abschnitt (12), der ein Lenkrad (18) trägt, wobei die beiden Abschnitte (12, 16) miteinander gelenkig verbunden sind, um ein Verschwenken des oberen Abschnittes (12) zwischen einer Fahrstellung und einer zurückgezogenen Stellung zu ermöglichen; und
- einer Druckfeder (34), die zur Wirkung zwischen den zwei Abschnitten (12, 16) der Lenksäule (10) vorgesehen ist, um den oberen Abschnitt (12) bei Freigabe eines Verriegelungsmechanismus (40) auf die zurückgezogene Stellung anzuheben; und
**dadurch gekennzeichnet, dass** die Lenksäulen-Baugruppe (10) weiterhin eine Strebe (32) mit einstellbarer Länge umfasst, die schwenkbar an einem Ende mit einem der Lenksäulen-Abschnitte (12) verbunden ist, wobei das andere Ende der Strebe (32) auf eine Bewegung gegenüber dem anderen Lenksäulen-Abschnitt (16) entlang einer festen Bahn (28) beschränkt ist; wobei die Strebe (32) betreibbar ist, um die Fahrstellung des oberen Lenksäulen-Abschnittes (12) gegenüber dem unteren Lenksäulen-Abschnitt (16) einzustellen und der lösbare Verriegelungsmechanismus (40) betreibbar ist, um das zweite Ende der Strebe (32) an einem Ende der Bahn (28) zu halten, wenn sich das Lenkrad (18) in der Fahrstellung befindet; wobei die Bewegung des zweiten Endes der Strebe (32) in Richtung auf das andere Ende der Bahn (28) beim Lösen des Verriegelungsmechanismus (40) von einem Verschwenken des oberen Lenksäulen-Abschnittes (12) in Richtung auf die zurückgezogene Stellung begleitet ist.

2. Lenksäulen-Baugruppe nach Anspruch 1, **dadurch gekennzeichnet, dass** der Verriegelungsmechanismus (40) durch ein fußbetätigtes Pedal (22) lösbar ist, das an dem unteren Ende des unteren Abschnittes (16) der Lenksäule (10) befestigt ist.

3. Lenksäulen-Baugruppe nach Anspruch 1 oder 2, **dadurch gekennzeichnet, dass** die Strebe (32) eine Gasdruck-Strebe ist, die in irgendeiner Position verriegelbar ist.

4. Lenksäulen-Baugruppe nach Anspruch 1 oder 2, **dadurch gekennzeichnet, dass** die Strebe aus zwei teleskopartig angeordneten Teilen in Schraubeingriff miteinander gebildet ist.

5. Lenksäulen-Baugruppe nach einem der vorhergehenden Ansprüche, **dadurch gekennzeichnet, dass**:
- ein stationärer Haltebügel (14) auf dem oberen Ende des unteren Lenksäulen-Abschnittes (12) befestigt ist; und
- die Bahn (28) aus zumindest einem Schlitz (28) besteht, der in einem herabhängenden Schenkelteil (26) des Haltebügels (14) vorgesehen ist.

6. Lenksäulen-Baugruppe nach einem der vorhergehenden Ansprüche, **dadurch gekennzeichnet, dass** ein lösbarer Verriegelungsmechanismus (42) betreibbar ist, um den oberen Lenksäulen-Abschnitt (12) in einer zurückgezogenen Stellung zu verriegeln.

7. Lenksäulen-Baugruppe nach Anspruch 6 unter direkter oder indirekter Rückbeziehung auf Anspruch 2, **dadurch gekennzeichnet, dass** der Verriegelungsmechanismus (42) betriebsmäßig mit dem Verriegelungsmechanismus (40) verbunden ist, wobei der Verriegelungsmechanismus (42) durch eine Betätigung des Fußpedals (22) entriegelt wird.

## Revendications

1. Colonne de direction (10) comprenant :
- une section de colonne inférieure (16),
- une section de colonne supérieure (12) portant un volant de direction (18), les deux sections (12, 16) étant articulées l'une par rapport à l'autre de manière à permettre à la section supérieure (12) de pivoter entre une position de conduite et une position rentrée; et
- un ressort de compression (34) prévu pour agir entre les deux sections (12, 16) de la colonne de direction (10) de manière à relever la section supérieure (12) dans la position rentrée lors de la libération d'un mécanisme récepteur (40); et
**caractérisée en ce que** la colonne de direction (10) comprend en outre un raidisseur (32) de longueur réglable, relié à pivotement à une extrémité de l'une des sections (12) de la colonne, l'autre extrémité du raidisseur (32) étant obligée de se déplacer par rapport à l'autre section (16) de la colonne sur un itinéraire fixe (28); le raidisseur étant actionnable pour régler la position de conduite de ladite section (12) supérieure de la colonne relativement à ladite section inférieure (16) de la colonne et ledit mécanisme récepteur libérable (40) étant actionnable de manière à retenir la deuxième extrémité du raidisseur (32) à une extrémité de l'itinéraire (28) lorsque le volant de direction (18) est dans la position de conduite; le mouvement de la deuxième extrémité du raidisseur (32) en direction de l'autre extrémité de l'itinéraire (28) lors de la libération du mécanisme récepteur (40) étant accompagné par le pivotement de la section (12) supérieure de la colonne de direction en direction de la position rentrée.

2. Colonne de direction selon la revendication 1, **caractérisée en ce que** le mécanisme récepteur (40) est libérable au moyen d'une pédale à commande au pied (22) montée sur l'extrémité inférieure de la section inférieure (16) de la colonne de direction (10).

3. Colonne de direction selon la revendication 1 ou 2, **caractérisée en ce que** le raidisseur (32) est un raidisseur à gaz qui peut être bloqué dans toute position donnée.

4. Colonne de direction selon la revendication 1 ou 2, **caractérisée en ce que** le raidisseur est constitué de deux éléments télescopiques à engagement réciproque par filet de vis.

5. Colonne de direction selon l'une quelconque des revendications précédentes, **caractérisée en ce que** :
- une console fixe (14) est montée sur l'extrémité supérieure de la section de colonne inférieure (12); et
- l'itinéraire (28) comprend au moins une rainure (28) disposée dans un élément de jambe dépendant (26) de la console (14).

6. Colonne de direction selon l'une quelconque des revendications précédentes, **caractérisée en ce qu'**un mécanisme de blocage libérable (42) est actionnable pour bloquer la section de colonne supérieure (12) dans une position rentrée.

7. Colonne de direction selon la revendication 6 lorsque celle-ci est reliée directement ou indirectement à la revendication 2, **caractérisée en ce que** le mécanisme de blocage (42) est relié fonctionnellement audit mécanisme récepteur (40); ledit mécanisme de blocage (42) étant débloqué par l'actionnement de ladite pédale (22).
